# EUROPÄISCHE PATENTSCHRIFT

(11) **EP 2 051 867 B1**
(45) Veröffentlichungstag und Bekanntmachung des Hinweises auf die Patenterteilung: **24.04.2013**
(21) Anmeldenummer: 07730148.9
(22) Anmeldetag: 14.06.2007
(51) Int. Cl.: G01L 9/00, B60C 23/04, H02N 2/18

(54) **PIEZO-ELEMENT ZUR SENSORENERGIEVERSORGUNG**
PIEZO ELEMENT FOR SENSOR POWER SUPPLY
ELEMENT PIEZO-ELECTRIQUE POUR ALIMENTATION D'UN CAPTEUR

(30) Priorität: 11.08.2006 DE 102006037692
(43) Veröffentlichungstag der Anmeldung: 29.04.2009
(73) Patentinhaber: Robert Bosch GmbH, 70442 Stuttgart (DE)
(72) Erfinder: REICHENBACH, Ralf, 73732 Esslingen (DE); BUCK, Thomas, 71732 Tamm (DE)
(86) Internationale Anmeldenummer: PCT/EP2007/055868
(87) Internationale Veröffentlichungsnummer: WO 2008/017537

(56) Entgegenhaltungen:
- WO-A-2006/072539
- DE-A1-102004 031 810
- US-A1- 2006 022 555
- US-B1- 6 175 302

## Beschreibung

Die Erfindung betrifft ein Schaltungsmodul, das insbesondere als Reifensensor einsetzbar ist.

### Stand der Technik

Reifensensoren dienen insbesondere zur Messung des Reifeninnendrucks (tire pressure monitoring system, TPMS), weiterhin auch der Temperatur oder von Beschleunigungen, die im Reifen auftreten. Hierbei wird in der Regel ein Sensormodul mit einem Schaltungsträger, mindestens einem Sensor-bauelement und einer Antenne gebildet, über die an eine Sende-Empfangseinrichtung am Fahrzeug Daten übermittelt werden. Zur Energieversorgung sind insbesondere zwei Systeme bekannt. Bei einem wird die Energie durch eine Batterie bzw. galvanische Zelle und bei dem anderen durch elektromagnetische Einstrahlung bzw. Einkopplung zur Verfügung gestellt.

Eine autarke Energieversorgung mit Batterien bringt Umweltprobleme mit sich, insbesondere durch die hohen Entsorgungskosten und den Aufwand der Trennung bei der Demontage. Derartige Reifensensormodule sind in der Regel an der Reifenfelge zu montieren, da die als Batterien eingesetzten galvanischen Zellen getrennt vom Gummimaterial des Reifens zu entsorgen sind und die beim Einvulkanisieren im Reifen auftretenden Temperaturen nicht ertragen. Weiterhin ist die Betriebsdauer durch die Kapazität der häufig nicht auswechselbaren Batterie begrenzt; da die Größe des Sensormoduls begrenzt ist, können auch die Batterien nicht zu groß dimensioniert sein.

Bei Stromversorgung durch elektromagnetische Einstrahlung bzw. Einkopplung wird im Prinzip ein passiver Transponder gebildet; das hierdurch auslesbare Signal ist jedoch schwach, weiterhin ist ein Abfragesignal mit hoher Intensität erforderlich. DE 102004 031810 offenbartein System zur Energie versorgung mittels eines Piezo-Elements zur Anordnung in einem Fahrzeugreifen mit einer Trägerplatte und einem gehaüse.

### Offenbarung der Erfindung

Der Erfindung liegt der Gedanke zu Grunde, in dem Schaltungsmodul einen Energiewandler vorzusehen, der die durch mechanische Belastung, insbesondere durch Biegung und/oder Druck auftretenden Verformungsenergien aufgrund des piezoelektrischen Effektes in eine elektrische Spannung umwandelt, die zur Versorgung der Elektronik verwendet werden kann. Insbesondere bei diskontinuierlichen mechanischen Belastungen bzw. diskontinuierlichem Betrieb der Elektronik kann die generierte Energie auch in einem Energiespeicher zwischengespeichert werden, z. B. einem Kondensator oder Akkumulator.

Erfindungsgemäß wird ein Piezo-Element an einem Substrat gelagert, wobei es in Einspannbereichen eingespannt wird und mit mindestens einem weiteren, frei schwingenden Bereich eine freie Schwingbewegung durchführen kann. Erfindungsgemäss wird das Piezo-Element zwischen zwei Substratelemente, insbesondere zwei Substrathälften eingespannt, hierbei bilden die Substrathälften zwischen sich eine Kavität aus, in der das Piezo-Element frei schwingen kann, ohne mechanisch beschädigt zu werden. Die Tiefe und Form der Kavität können als Überlastanschläge die Schwingbewegung bzw. Auslenkung begrenzen, wozu ggf. ergänzend Anschlagmittel vorgesehen sein können.

Weiterhin dient zumindest eine Substrathälfte auch als Schaltungsträger für die ergänzenden Bauelemente, z. B. Sensor, ASIC und passive und aktive Bauelemente, wobei diese in der das Piezo-Element aufnehmenden Kavität angeordnet ist. Vorteilhafterweise sind auch sämtliche zusätzlichen Bauelemente, auch eine Spannungsversorgungsschaltung zur Aufnahme der Piezo-Spannung und zur Bereitstellung der Versorgungsspannung, der Energiespeicher und z. B. auch die Antenne auf dem Schaltungsträger, der das Piezoelement einspannt, vorgesehen. Somit kann ein kompaktes, hoch integriertes Schaltungsmodul realisiert werden kann. Dies ist insbesondere bei Integration in einem Reifen vorteilhaft, da hier die Bauteilgröße ein sehr kritischer Parameter ist.

Die Form des keramischen Piezo-Elementes kann grundsätzlich frei gewählt werden; sie kann zum einen rechteckig sein, insbesondere auch quadratisch, es sind jedoch auch z. b. runde Keramikscheiben möglich. Weiterhin können Formgebung und Größe auch in Abhängigkeit der einzustellenden Eigenfrequenz gewählt werden, z. B. mit sich zu den schwingenden Bereichen hin vergrößernder Breite oder umgekehrt. Die Resonanzfrequenz kann hierbei durch die Ausbildung der Federkonstante des Piezoelementes und gegebenenfalls ergänzend durch Anbringung einer seismischen Masse abgestimmt werden.

Die Kontaktierung des Piezo-Elementes kann durch die Verbindung im Einspannbereich erreicht werden, z. B. durch einen Leitkleber oder Lot, so dass keine zusätzliche Kontaktierung erforderlich ist.

### Erfindungsgemäß ergeben sich somit einige Vorteile:

Das Schaltungsmodul besitzt eine autarke Energieversorgung, so dass keine zusätzlichen, in der Lebensdauer begrenzten und in der Entsorgung problematischen Batterien bzw. galvanischen Zellen einzusetzen sind. Die zum Betrieb erforderliche Energie wird durch das Piezo-Element als mechanischelektrischen Energiewandler gewonnen, der die ohnehin auftretenden mechanischen Belastungen ausnutzt.

Es wird erfindungsgemäß ein autarkes Schaltungsmodul, insbesondere Sensormodul, mit hoher Lebensdauer, geringen Entsorgungsproblemen bzw. hoher Umweltverträglichkeit, nicht allzu komplexem Aufbau und hoher Integrationsdichte erreicht werden. Indem das Piezo-Element zwischen die ohnehin zur Aufnahme der Bauelemente und ggf. Abschirmung nach außen verwendeten Substrathälften eingespannt wird, sind wenige zusätzliche Hilfsmittel erforderlich.

Das erfindungsgemäße Schaltungsmodul kann somit überall dort eingesetzt werden, wo regelmäßig oder unregelmäßig mechanische Belastungen auftreten. Dies ist insbesondere bei Ansatz als Reifensensormodul möglich, das auch direkt in das Gummimaterial des Reifens, z. B. im Bereich der Lauffläche eingebracht, z. B. einvulkanisiert, eingeklebt, in einer Tasche aufgenommen oder eingeklemmt, werden kann und somit die auftretenden Beschleunigungen besser messen kann als z. B. im Bereich der Felge.

### Kurze Beschreibung der Zeichnungen

Die Erfindung wird im Folgenden anhand der beiliegenden Zeichnungen an einigen Ausführungsformen näher erläutert. Es zeigen:
- Fig. 1: die Einbindung eines Piezo-Elementes zwischen zwei Substrathälften;
- Fig. 2: ein Schaltungsmodul gemäß einer ersten Ausführungsform mit mittig eingespanntem Piezo-Element;
- Fig. 3: ein Schaltungsmodul gemäß einer weiteren Ausführungsform mit in Endbereichen eingespanntem Piezo-Element;
- Fig. 4: eine Draufsicht auf eine Substrathälfte des Schaltungsmoduls mit eingespanntem Piezo-Element aus Fig. 1;
- Fig. 5: eine Draufsicht auf eine Substrathälfte und mit eingespanntem Piezo-Element bei einer Ausführungsform mit Anbringung weiterer Bauelemente;
- Fig. 6: einen Querschnitt durch ein als Drucksensor dienendes Schaltungsmodul mit Gehäuse.

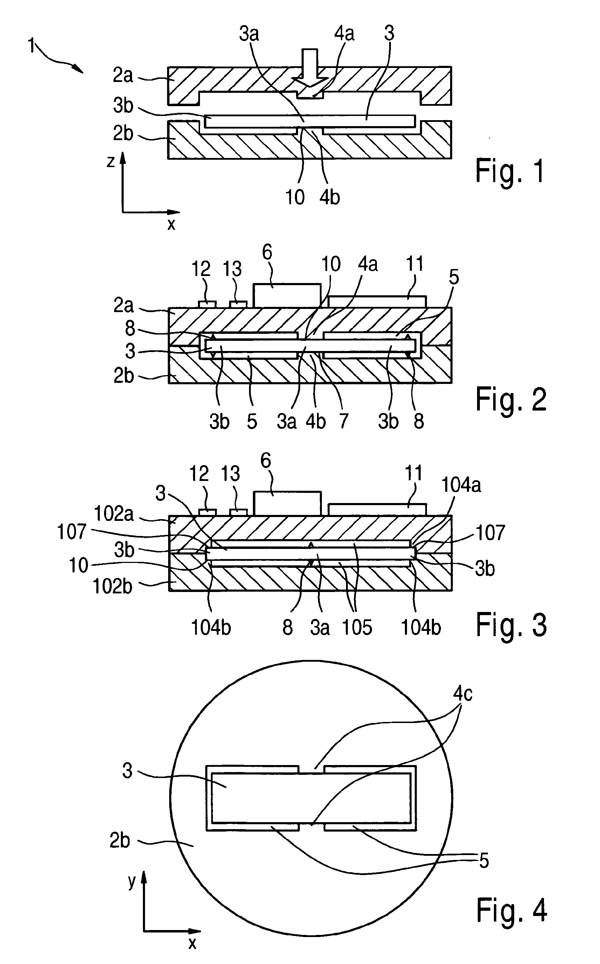

Ein in Fig. 2 gezeigtes erfindungsgemäßes Schaltungsmodul 1 wird aus mindestens zwei Substrathälften 2a und 2b und einem zwischen diesen Substrathälften 2a, 2b befestigten Piezo-Element 3 aus einem Keramikmaterial gebildet. Auf mindestens einer der Substrathälften 2a, 2b sind in an sich bekannter Weise aktive oder passive Bauelemente 6, 11, 12, 13 aufgenommen.

Erfindungsgemäß wird das Piezo-Element 3 an einer oder mehreren Stellen eingespannt. Figur 1, 2 zeigt eine Ausführungsform, bei der ein mittlerer bereich 3a des Piezo-Elementes 3 als Einspannbereich 3a durch zwei sich gegenüberliegende, als Vorsprünge ausgebildete Einspannstellen 4a, 4b der Substrathälften 2a, 2b durch Ausbildung einer Klemmverbindung 7 in Z-Richtung eingespannt wird, wobei zwischen den Substrathälften 2a und 2b eine durchgehende oder zwei getrennte, sich in x-Richtung erstreckende Kavitäten 5 ausgebildet sind, in denen die äußeren Enden 3b des Piezo-Elementes 3 als Schwingbereiche 3b in der xz-Ebene schwingen können.

Alternativ hierzu können gemäß dem Schaltungsmodul 101 der Figur 3 die lateral äußeren Enden 3b des plattenförmigen Piezo-Elementes 3 in lateral äußeren Einspannstellen 104a, 104b der Substrathälften 102a, 102b eingespannt werden, so dass der mittlere Bereich 3a des Piezo-Elementes 3 schwingt, d. h. eine Biegeschwingung durchführt. Somit sind lateral außen zwei Klemmverbindungen 107 ausgebildet, wobei zwischen den Substrathälften 102a, 102b eine durchgehende Kavität 105 ausgebildet ist.

Das Piezo-Element 3 wird somit durch einen Formschluss der beiden Substrathälften 2a, 2b bzw. 102a, 102b gelagert; hierbei können auf den Substrathälften 2a, 2b bzw. 102a, 102b ergänzend weitere Hilfsmittel zur Einspannung des Piezo-Elementes angebracht oder ausgebildet werden. Die Tiefe und Form der Kavität 105 bzw. der mehreren Kavitäten 5 können als Überlastanschläge eingesetzt werden und die Auslenkung der mechanischen Biegeschwingung der äußeren Enden 3b gemäß Figur 2 und entsprechend des mittleren Bereichs 3a gemäß Figur 3 begrenzen. Hierbei können ergänzend Anschlagmittel 8 vorgesehen sein, entweder gemäß Figur 2 und 3 auf dem Piezo-Element 3, oder grundsätzlich auch auf den Substrathälften 2a, 2b, 102a, 102b, so dass sie sich in die Kavität 5, 105 erstrecken und die Auslenkung des schwingenden Bereichs 3a bzw. 3b des Piezo-Elementes 3 begrenzen.

Die Kontaktierung des Piezo-Elementes 3 kann direkt über die Klemmverbindungen 7 bzw. 107 zwischen den Substrathälften 2a, 2b bzw. 102a, 102b und dem Piezo-Element 3 erfolgen; hierzu sind vorteilhafterweise leitfähige Kontaktschichten 10 als Elektroden zwischen den Einspannbereichen 3a bzw. 3b des Piezo-Elementes 3 und den Einspannstellen 4a, 4b, 104a, 104b der Substrathälften vorgesehen. Die Kontaktschicht 10 kann insbesondere ein leitfähiger Kleber, z. B. Silberleitkleber, oder eine Lotschicht sein. Die Kontaktierung kann hierbei an der Oberseite und/oder Unterseite des Piezo-Elementes 3 erfolgen, d. h. mit der oberen Substrathälfte 2a bzw. 102a und/oder der unteren Substrathälfte 2b bzw. 102b.

Das Piezo-Element 3 ist vorteilhafterweise aus einem keramischen Material, z. B. PZT (Bleizirkonat-Titanat) gefertigt und weist daher eine hohe Biegesteifigkeit auf, so dass geringe Auslenkungen der nicht eingespannten, schwingenden Bereiche 3a, 3b des Piezo-Elementes 3 in der Kavität 5 auftreten.

Das Piezo-Element 3 kann in einem Arbeitsgang kontaktiert und in den Substrathälften 2a, 2b bzw. 102a, 102b aufgenommen bzw. verpackt werden. Hierbei erfolgt vorteilhafterweise ein vollständiger Einschluss des Piezo-Elementes 3 zwischen den Substrathälften 2a, 2b bzw. 102a, 102b, so dass es vor Umgebungseinflüssen geschützt ist.

Die Bauelemente 6, 11, 12, 13 können je nach Verwendung des Schaltungsmoduls 1 bzw. 101 ausgewählt werden; hierbei ist eine Stromversorgungsschaltung 12 vorgesehen, die die von dem Piezo-Element abgegebene Piezo-Spannung Up aufnimmt, gleichrichtet und als Spannungsquelle für das gesamte Schaltungsmodul dient. Bei den gezeigten Anordnungen wird die Piezo-Spannung im Allgemeinen zwischen der Oberseite und Unterseite des Piezo-Elementes 3 auftreten, wobei bei einer Biegeschwingung ein Vorzeichenwechsel bzw. Polaritätswechsel der erzeugten Piezo-Spannung Up auftritt, die von einer als Bauelement montiertem, als Stromversorgungschaltung dienenden Gleichrichterschaltung 12 gleichgerichtet wird, wobei sie vorzugsweise ergänzend eine Lastanpassung vornimmt; weiterhin wird die Spannung über einen als Energiespeicher dienenden Kondensator 13 geglättet und zwischengespeichert.

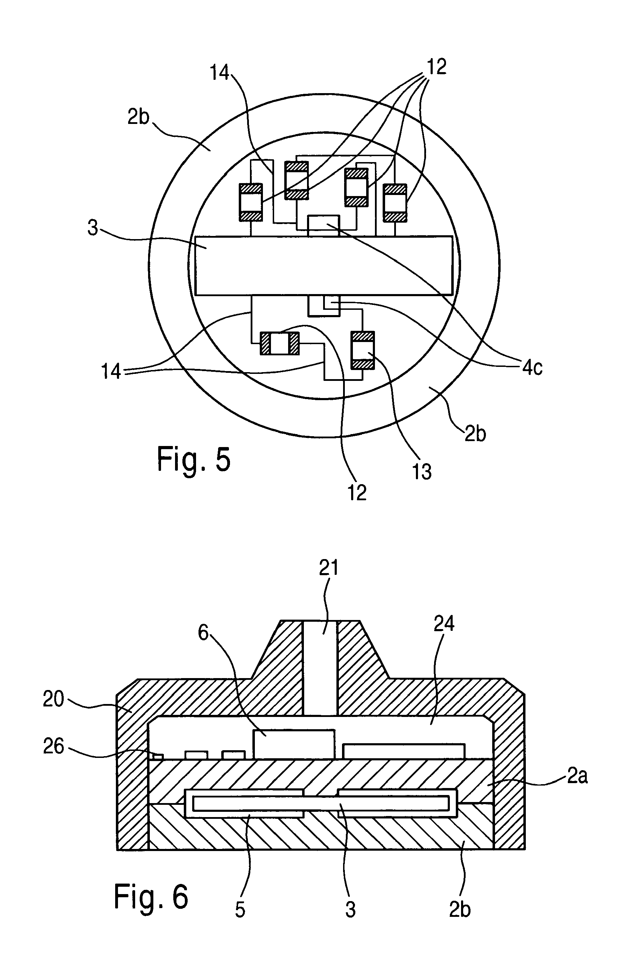

Weiterhin können z. B. ein Sensor-Bauelement 6, eine Steuereinrichtung, z. B. ein ASIC 11 und weitere Bauelemente angebracht werden; weiterhin sind auf der betreffenden Substrathälfte 2b, 102b in an sich bekannter Weise die in der Aufsicht der Figur 5 dargestellten Leiterbahnen 14 und Lötpads zur Aufnahme der Bauelemente 6, 11, 12, 13 sowie zur Kontaktierung des Piezo-Elementes 3 ausgebildet.

Die Bauelemente 6, 11, 12, 13 können auch in der Kavität 5 zwischen den Substrathälften 2a, 2b in einem Bereich angeordnet werden, wo sie durch den schwingenden Bereich 3a bzw. 3b des Piezo-Elementes 3 nicht beeinträchtigt werden. Somit sind bei dieser Ausführungsform sowohl das Piezo-Element 3 als auch die Bauelemente 6, 11, 12, 13 und entsprechend die Leiterbahnen 14 und Bondpads bzw. Lötpads sicher zwischen den Substrathälften 2a, 2b aufgenommen. Bei einer derartigen Ausführungsform ist grundsätzlich kein weiteres, die Substrathälften 2a, 2b aufnehmendes Gehäuse erforderlich.

Gemäß der Aufsicht der Figur 4 und 5 wird das Piezo-Element 3 in seinem jeweiligen Einspannbereich (hier der mittlere Bereich 3a) durch seitliche Anlagebereiche 4c einer oder beider Substrathälfte 2a oder 2b in y-Richtung fixiert. Hierbei können die Anlagebereiche 4c auch eine gewisse aufeinander gerichtete Spannung zur klemmenden Aufnahme des Piezo-Elementes 3 aufweisen. Weiterhin kann die Kontaktierung der beiden Elektroden des Piezo-Elementes 3 auch über diese seitlichen Anlagebereiche 4c erfolgen.

Die Substrathälften 2a und 2b des Substratstacks können z. B. Leiterplatten oder Keramiksubstrate sein. Die Kontaktierung des Piezo-Elementes 3 mit dem auf der Oberseite einer Substrathälfte 2a, 102a vorgesehenen Bauelementen 6, 11, 12, 13 können insbesondere über durch zumindest eine Substrathälfte 2a geführte Durchkontaktierungen erfolgen.

Das erfindungsgemäße Schaltungsmodul 1, 101 kann für unterschiedliche Anwendungen eingesetzt werden, bei denen eine autarke Energieversorgung sinnvoll oder erforderlich ist. Figur 6 zeigt die Ausführungsform eines Schaltungsmoduls 1 mit zusätzlichem Gehäuse 20, in dem der Substratstack 2a, 2b mitsamt dem Piezo-Element 3 und den Bauelementen aufgenommen ist, die in einem Freiraum 24 aufgenommen sind. Bei Anwendung als Drucksensormodul ist ein Loch 21 als Druckzugang zu dem Freiraum 24 vorgesehen, damit das Sensorbauelement 6 den Umgebungsdruck messen kann. Das Gehäuse 20 kann auf den Substratstack 2a, 2b einfach aufgesetzt und z. B. mittels einer Klebeverbindung befestigt werden. Je nach Anwendung kann auch auf der Unterseite ein Gehäuseteil angebracht werden. Wie bereits oben ausgeführt, kann das Gehäuse 20 auch weggelassen werden, indem die entsprechenden Bauelemente zwischen den Substrathälften 2a, 2b aufgenommen werden.

Bei Einsatz als Reifensensormodul ist in der Regel eine Antenne 26 zum Aussenden von Antennensignalen an eine im Fahrzeug vorgesehene Sende-Empfangseinrichtung auf z. B. der oberen Substrathälfte oder an dem Gehäuse 20 vorgesehen.

## Patentansprüche

1. Schaltungsmodul, das mindestens aufweist:
• ein Substrat (2a, 2b; 102a, 102b), auf oder in dem mindestens ein Bauelement (6, 11, 12, 13) angebracht ist,
• ein Piezo-Element (3), das mindestens einen Einspannbereich (3a, 3b) und mindestens einen Schwingbereich (3b, 3a) aufweist, wobei das Piezo-Element (3) in seinem Einspannbereich (3a, 3b) an dem Substrat (2a, 2b; 102a, 102b) oder einem an dem Substrat befestigten Mittel eingespannt ist und der mindestens eine Schwingbereich (3b, 3a) schwingfähig aufgenommen ist,
• an dem Piezo-Element (3) vorgesehene Kontaktierungen (10) zur Abnahme einer Piezo-Spannung (Up), und
• eine Stromversorgungsschaltung (12, 13), die die von dem Piezo-Element (3) erzeugte Piezo-Spannung (Up) aufnimmt und als Spannungsquelle zur Stromversorgung des Schaltungsmoduls (1, 101) dient,
wobei das Substrat mindestens zwei Substrat-Elemente (2a, 2b; 102a, 102b) aufweist, zwischen denen das Piezo-Element (3) eingespannt ist,
wobei zwischen den Substrat-Elementen (2a, 2b; 102a, 102b) mindestens eine Kavität (5, 105) ausgebildet ist, in der der mindestens eine Schwingbereich (3b, 3a) des Piezo-Elementes (3) auslenkbar aufgenommen und in seinem Schwingweg begrenzt ist,
**dadurch gekennzeichnet, dass**
zumindest ein Bauelement (6, 11, 12, 13) in der mindestens einen Kavität (5, 105) zwischen den Substrat-Elementen (2a, 2b; 102a, 102b) aufgenommen ist.

2. Schaltungsmodul nach Anspruch 1, **dadurch gekennzeichnet, dass** an dem Piezo-Element (3) und/oder mindestens einem Substrat-Element (2a, 2b; 102a, 102b) mindestens ein Anschlagmittel (8) zur Begrenzung des Schwingweges ausgebildet ist.

3. Schaltungsmodul nach einem der vorherigen Ansprüche, **dadurch gekennzeichnet, dass** ein mittlerer Bereich (3a) des Piezo-Elementes (3) als Einspannbereich (3a) eingespannt ist und seine seitlichen äußeren Endbereiche (3b) als Schwingbereiche (3b) frei schwingend aufgenommen sind.

4. Schaltungsmodul nach einem der Ansprüche 1 bis 3, **dadurch gekennzeichnet, dass** mindestens zwei äußere Endbereiche (3b) des Piezo-Elementes (3) eingespannt sind und der mittlere Bereich (3a) frei schwingend aufgenommen ist.

5. Schaltungsmodul nach einem der vorherigen Ansprüche, **dadurch gekennzeichnet, dass** die Kontaktierungen (10) des Piezo-Elementes (3) zum Abgriff der erzeugten Piezo-Spannung (Up) in seinen Einspannbereichen ausgebildet sind.

6. Schaltungsmodul nach Anspruch 5, **dadurch gekennzeichnet, dass** als Kontaktierungen (10) auf das Piezo-Element (3) aufgebrachte elektrisch leitfähige Schichten (10), z. B. leitfähige Klebeschichten oder Lot, vorgesehen sind, die auch die mechanische Verbindung des Piezo-Elementes (3) mit dem Substrat (2a, 2b; 102a, 102b) bilden.

7. Schaltungsmodul nach einem der vorherigen Ansprüche, **dadurch gekennzeichnet, dass** das Piezo-Element (3) in seinem mindestens einen Einspannbereich (3a, 3b) zusätzlich durch mindestens zwei am Substrat (2a, 2b; 102a, 102b) ausgebildete seitliche Anlagebereiche (4c) in einer zu seiner Schwingebene (x, z) orthogonalen dritten Richtung (y) geführt oder eingespannt ist.

8. Schaltungsmodul, nach einem der vorherigen Ansprüche, **dadurch gekennzeichnet, dass** das Piezo-Element (3) die einzige Energiequelle des Schaltungsmoduls ist und es frei von sich verbrauchenden Energiequellen ist.

9. Schaltungsmodul nach einem der vorherigen Ansprüche, **dadurch gekennzeichnet, dass** die Stromversorgungsschaltung (12, 13) einen Gleichrichter (12) und einen Energiespeicher (13) zur Zwischenspeicherung der von dem Piezo-Element (3) erzeugten Energie aufweist.

10. Schaltungsmodul nach einem der vorherigen Ansprüche, **dadurch gekennzeichnet, dass** die Stromversorgungsschaltung (12, 13) durch ein oder mehrere auf dem Substrat (2a, 2b; 102a, 102b) angebrachte Bauelemente (12, 13) gebildet ist.

11. Schaltungsmodul nach einem der vorherigen Ansprüche, **dadurch gekennzeichnet, dass** zumindest ein Teil der Bauelemente (6, 11, 12, 13) auf der Oberseite des Substrates (2a, 2b; 102a, 102b) angeordnet und mit dem Piezo-Element (3) verbunden ist, z. B. mittels Durchkontaktierungen.

12. Schaltungsmodul nach einem der vorherigen Ansprüche, **dadurch gekennzeichnet, dass** es mindestens ein Sensorbauelement (6) zur Messung des Drucks und/oder der Temperatur und/oder der Beschleunigung aufweist.

13. Schaltungsmodul nach einem der vorherigen Ansprüche, **dadurch gekennzeichnet, dass** es in einem Gehäuse (20) aufgenommen ist.

14. Schaltungsmodul nach einem der vorherigen Ansprüche, **dadurch gekennzeichnet, dass** es eine Antenne (26) zum Aussenden von Antennensignalen aufweist.

15. Fahrzeugreifen mit einem Schaltungsmodul nach einem der vorherigen Ansprüche, **dadurch gekennzeichnet, dass** das Schaltungsmodul (1) in das Gummimaterial des Fahrzeugreifens eingebracht, z. B. einvulkanisiert, eingeklebt, in einer Tasche aufgenommen oder eingeklemmt ist.

## Claims

1. Circuit module which at least has:
• a substrate (2a, 2b; 102a, 102b), at least one component (6, 11, 12, 13) being mounted on or in the said substrate,
• a piezo element (3) which has at least one clamping region (3a, 3b) and at least one oscillating region (3b, 3a), wherein the piezo element (3) is clamped to the substrate (2a, 2b; 102a, 102b), or a means which is attached to the substrate, in its clamping region (3a, 3b), and the at least one oscillating region (3b, 3a) is held such that it can oscillate,
• contact-making means (10), which are provided on the piezo element (3), for drawing a piezo voltage (Up), and
• a power supply circuit (12, 13) which receives the piezo voltage (Up), which is generated by the piezo element (3), and serves as a voltage source for supplying power to the circuit module (1, 101),
wherein the substrate has at least two substrate elements (2a, 2b; 102a, 102b), the piezo element (3) being clamped between the said substrate elements, wherein at least one cavity (5, 105) is formed between the substrate elements (2a, 2b; 102a, 102b), the at least one oscillating region (3b, 3a) of the piezo element (3) being held such that it can be deflected and the oscillating travel of the said piezo element being limited in the said cavity,
**characterized in that**
at least one component (6, 11, 12, 13) is held in the at least one cavity (5, 105) between the substrate elements (2a, 2b; 102a, 102b).

2. Circuit module according to Claim 1, **characterized in that** at least one stop means (8) for limiting the oscillating travel is formed on the piezo element (3) and/or at least one substrate element (2a, 2b; 102a, 102b).

3. Circuit module according to one of the preceding claims, **characterized in that** a central region (3a) of the piezo element (3) is clamped as the clamping region (3a) and the lateral outer end regions (3b) of the said piezo element are held in a freely oscillating manner as oscillating regions (3b).

4. Circuit module according to one of Claims 1 to 3, **characterized in that** at least two outer end regions (3b) of the piezo element (3) are clamped and the central region (3a) is held in a freely oscillating manner.

5. Circuit module according to one of the preceding claims, **characterized in that** the contact-making means (10) of the piezo element (3) are designed to tap off the generated piezo voltage (Up) in the clamping regions of the said piezo element.

6. Circuit module according to Claim 5, **characterized in that** the contact-making means (10) provided are electrically conductive layers (10), for example conductive adhesive layers or solder, which are applied to the piezo element (3) and which also form the mechanical connection between the piezo element (3) and the substrate (2a, 2b; 102a, 102b).

7. Circuit module according to one of the preceding claims, **characterized in that** the piezo element (3), in its at least one clamping region (3a, 3b), is additionally guided or clamped by at least two lateral abutment regions (4c), which are formed on the substrate (2a, 2b; 102a, 102b), in a third direction (y) which is orthogonal to its oscillating plane (x, z).

8. Circuit module according to one of the preceding claims, **characterized in that** the piezo element (3) is the only energy source of the circuit module and it is free of consumable energy sources.

9. Circuit module according to one of the preceding claims, **characterized in that** the power supply circuit (12, 13) has a rectifier (12) and an energy storage means (13) for temporarily storing the energy which is generated by the piezo element (3).

10. Circuit module according to one of the preceding claims, **characterized in that** the power supply circuit (12, 13) is formed by one or more components (12, 13) which is mounted on the substrate (2a, 2b; 102a, 102b).

11. Circuit module according to one of the preceding claims, **characterized in that** at least some of the components (6, 11, 12, 13) are arranged on the upper face of the substrate (2a, 2b; 102a, 102b) and connected, for example by means of plated-through holes, to the piezo element (3).

12. Circuit module according to one of the preceding claims, **characterized in that** it has at least one sensor component (6) for measuring the pressure and/or the temperature and/or the acceleration.

13. Circuit module according to one of the preceding claims, **characterized in that** it is accommodated in a housing (20).

14. Circuit module according to one of the preceding claims, **characterized in that** it has an antenna (26) for emitting antenna signals.

15. Vehicle tyre having a circuit module according to one of the preceding claims, **characterized in that** the circuit module (1) is held or trapped in a pocket such that it is inserted, for example vulcanized or adhesively bonded, into the rubber material of the vehicle tyre.

## Revendications

1. Module de commutation qui présente au moins :
un substrat (2a, 2b; 102a, 102b) sur lequel ou dans lequel est placé au moins un composant (6, 11, 12, 13),
un piézo-élément (3) qui présente au moins une partie de serrage (3a, 3b) et au moins une partie oscillante (3b, 3a), le piézo-élément (3) étant serré dans sa partie de serrage (3a, 3b) sur le substrat (2a, 2b; 102a, 102b) ou sur un moyen fixé sur le substrat et la ou les parties oscillantes (3b, 3a) étant reçues de manière à pouvoir osciller,
des contacts (10) prévus sur le piézo-élément (3) pour saisir une tension piézo-électrique (Up) et
un circuit (12, 13) d'alimentation en courant qui reçoit la tension piézo-électrique (Up) produite par le piézo-élément (3) et qui sert de source de tension pour alimenter en courant le module de commutation (1, 101),
le substrat présentant au moins deux éléments de substrat (2a, 2b; 102a, 102b) entre lesquels le piézo-élément (3) est serré,
au moins une cavité (5, 105) dans laquelle la ou les parties oscillantes (3b, 3a) du piézo-élément (3) sont reçues de manière à pouvoir se déplacer de telle sorte que leur parcours d'oscillation soit limité étant formée entre les éléments (2a, 2b; 102a, 102b) du substrat,
**caractérisé en ce que**
au moins un composant (6, 11, 12, 13) est repris dans la ou les cavités (5, 105) entre les éléments (2a, 2b; 102a, 102b) du substrat.

2. Module de commutation selon la revendication 1, **caractérisé en ce qu'**au moins un moyen de butée (8) qui limite le parcours d'oscillation est formé sur le piézo-élément (3) et/ou sur le ou les éléments (2a, 2b; 102a, 102b) du substrat.

3. Module de commutation selon l'une des revendications précédentes, **caractérisé en ce qu'**une partie centrale (3a) du piézo-élément (3) est serrée en tant que partie de serrage (3a), ses parties d'extrémité latérales extérieures (3b) étant reprises à oscillation libre comme parties oscillantes (3b).

4. Module de commutation selon l'une des revendications 1 à 3, **caractérisé en ce qu'**au moins deux parties d'extrémité extérieure (3b) du piézo-élément (3) sont serrées et **en ce que** la partie centrale (3a) est reprise à oscillation libre.

5. Module de commutation selon l'une des revendications précédentes, **caractérisé en ce que** les contacts (10) du piézo-élément (3) prévus pour permettre la reprise de la tension piézo-électrique (Up) produite sont formés dans ses parties de serrage.

6. Module de commutation selon la revendication 5, **caractérisé en ce que** des couches électriquement conductrices (10), par exemple des couches adhésives conductrices ou de la brasure, sont prévues comme contacts (10) sur le piézo-élément (3) et forment également la liaison mécanique du piézo-élément (3) avec le substrat (2a, 2b; 102a, 102b).

7. Module de commutation selon l'une des revendications précédentes, **caractérisé en ce que** la ou les parties de serrage (3a, 3b) du piézo-élément (3) sont de plus guidées ou serrées dans une troisième direction (y) perpendiculaire au plan d'oscillation (x, z) par au moins deux parties latérales de butée (4c) formées sur le substrat (2a, 2b; 102a, 102b).

8. Module de commutation selon l'une des revendications précédentes, **caractérisé en ce que** le piézo-élément (3) est la seule source d'énergie du module de commutation et est exempt de sources d'énergie consommatrices.

9. Module de commutation selon l'une des revendications précédentes, **caractérisé en ce que** le circuit (12, 13) d'alimentation en courant présente un redresseur (12) et une réserve d'énergie (13) qui permet de conserver temporairement l'énergie délivrée par le piézo-élément (3).

10. Module de commutation selon l'une des revendications précédentes, **caractérisé en ce que** le circuit (12, 13) d'alimentation en courant est formé par un ou plusieurs composants (12, 13) placés sur le substrat (2a, 2b; 102a, 102b).

11. Module de commutation selon l'une des revendications précédentes, **caractérisé en ce qu'**au moins une partie des composants (6, 11, 12, 13) est disposée sur le côté supérieur du substrat (2a, 2b; 102a, 102b) et est reliée au piézo-élément (3) par exemple par des perforations de contact.

12. Module de commutation selon l'une des revendications précédentes, **caractérisé en ce qu'**il présente au moins un composant de détection (6) qui mesure la pression, la température et/ou l'accélération.

13. Module de commutation selon l'une des revendications précédentes, **caractérisé en ce qu'**il est repris dans un boîtier (20).

14. Module de commutation selon l'une des revendications précédentes, **caractérisé en ce qu'**il présente une antenne (26) qui émet des signaux d'antenne.

15. Bandage pour roue de véhicule doté d'un module de commutation selon l'une des revendications précédentes, **caractérisé en ce que** le module de commutation (1) est placé dans le matériau de caoutchouc du bandage pour roue de véhicule, par exemple par vulcanisation, collage, logement dans une poche ou serrage.
